# EUROPEAN PATENT APPLICATION

(11) **EP 0 990 929 A2**
(43) Date of publication of application: **05.04.2000**
(21) Application number: 99115027.7
(22) Date of filing: 03.08.1999
(51) Int. Cl.: G02B 6/245

(54) **Method and apparatus for a fiber optic jacket stripper**

(30) Priority: 03.08.1998 US 127737
(71) Applicant: Tyco Submarine Systems Ltd., Eatontown, NJ 07724 (US)
(72) Inventor: Varma, Ramesh, Berkeley Heights, New Jersey 07922 (US); Riggs, Richard S., Somerville, New Jersey 08876 (US); Mackenzie, Donald R., Kutztown, Pennsylvania 19530 (US)
(74) Representative: VOSSIUS & PARTNER

(57) **Abstract**

A method and apparatus for stripping an outer jacket from a fiber optic cable is disclosed. The end of a fiber optic cable is inserted between an upper cutting surface and a lower cutting surface in the fiber optic stripping tool. The fiber optic cable is engaged by the upper cutting surface substantially along a first half of the circumference of the outer jacket and the lower cutting surface substantially along the second half of the circumference of the outer jacket. The cutting surfaces cut through the circumference of the outer jacket. The cutting surfaces are disengaged from the jacket and the cut portion of the jacket is removed from the fiber optic cable.

## Description

The present invention relates to a method and apparatus for stripping an outer jacket from a fiber optic cable. More specifically, the present invention provides for engaging the outer jacket of the cable with a first cutting surface around half of the circumference of the jacket and engaging the other half of the circumference of the jacket with a second cutting surface in order to cut the jacket around its circumference so that it can be removed from the optical fiber contained within the cable.

Previously, jackets were not stripped from fiber optic cables. Due to the danger of damaging the fiber within the cable, the jacket was manufactured to the desired length and the fiber was then inserted into the pre-defined length of jacket. This is in contrast to a method utilized for obtaining a desired length of jacket for a cable that contains a copper conductor. In the copper cable context, a tool could be utilized to strip a portion of the jacket off of the cable by engaging the jacket with the tool and exerting a pulling force with the tool on the jacket to strip the jacket portion from the copper cable. The tool is pulled along the copper cable's longitudinal axis, with the tool engaging the jacket, until the jacket portion is removed from around the conductor. Tools as advertised in Techni-Tool®, catalog 61, page 55, as "Precision Wire Strippers", product numbers 217ST756, 217ST757, and 217ST3757 can be utilized to strip a jacket from a copper cable conductor. If a similar method with the tools was utilized for removing a jacket from a fiber optic cable the relatively fragile fiber, as contrasted to the copper cable conductor, would break due to the pulling force that would be exerted on the jacket, and consequently the optical fiber, by the tool.

Additionally, it was not thought that the copper cable stripping tools themselves could be used to strip a jacket from a fiber optic cable. The electrical cable contains a copper conductor that is, in comparison to an optical fiber conductor, rugged and generally unaffected by physical imperfections in the outer circumference of the conductor. Thus, when stripping an outer jacket from a copper conductor, if the stripping tool's cuffing surfaces contact the conductor during the process, even if they cut into the surface of the conductor, little damage is done to the transmission capacity of the conductor. However, the same result would not be expected if an optical fiber was contacted by the cutting surfaces of a stripping tool. Therefore, it was not thought that a copper cable stripping tool could be used for stripping a jacket from a fiber optic cable.

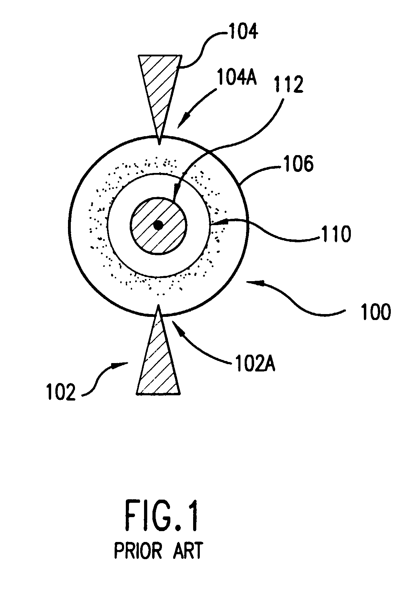

In order to provide some capability for stripping a jacket from a fiber optic cable, a method and tool was developed, however, the presently known method and tool have drawbacks. Fig. 1 illustrates how the presently known method and tool is utilized to strip the outer jacket 106 from a fiber optic cable 100. As shown, the tool (not entirely shown) includes a first knife edge 102 and a second knife edge 104. The knife edges are opposed to each other and engage the outer jacket 106 of the cable 100 at opposed sides of the jacket at locations 102A and 104A. Pressure is applied to the knife edges which then penetrate the outer jacket. The knife edges are then moved longitudinally through the jacket, i.e., along its length, by the operator to cut the jacket along the length of travel, thus splitting the jacket. The split jacket can then be pulled back from the inner buffer jacket 110 to permit access to the optical fiber 112.

The currently known method does not suffer the drawbacks that would be encountered if the copper conductor methodology was utilized, i.e., breaking of the fiber, because the presently known method does not attempt to pull the jacket off of the cable with the tool, but rather, splits the jacket along the length of the cable. However, as mentioned above, there are drawbacks with the currently known method for stripping a fiber optic cable jacket. Because the knife edges must penetrate the outer jacket and then be moved longitudinally through the jacket to split the jacket, the pressure that is applied to the knife edges must be carefully controlled along the entire length of travel. Thus, if there is any inconsistency in the application of pressure, problems will develop. Any reduction in the pressure applied along a particular length could result in the knife edges not thoroughly splitting the jacket for that length. Additionally, if too great a pressure is applied along a particular length, the optical fiber could be damaged as a result of the knife edges penetrating too deeply into the cable for that length. Another problem that may develop when utilizing the presently known method is that the fiber optic cable may twist or rotate as the knife edges are moved longitudinally along the cable. Thus, because the knife edges are required to travel longitudinally along the cable to split the jacket, problems may develop. Therefore, it would be desirable to provide for an improved method for stripping the outer jacket from a fiber optic cable that would not split the jacket along a length of the cable.

Optical fiber stripping methods are known for stripping a short length of a coating, e.g., acrylate, off of an optical fiber where the coating is formed directly on the fiber itself A tool as advertised in Techni-Tool®, catalog 61, page 55, as "Precision Wire Strippers; For Fiber Optics", product number 217ST557 can be utilized to practice the known method for stripping the coating from the optical fiber. However, this method also utilizes the tool to pull the short length of coating off of the optical fiber. The method and tool is directed to stripping a short length of an optical fiber coating from an optical fiber and not to stripping a jacket from an optical fiber cable.

The drawbacks in the known method for stripping an outer jacket from a fiber optic cable are overcome by the present invention. The method of the present invention includes the steps of inserting the end of a fiber optic cable that is to be stripped between an upper cutting surface and a lower cutting surface. The outer jacket of the cable is engaged by the upper cutting surface substantially along a first half of the circumference of the jacket and by the lower cutting surface substantially along the second half of the circumference of the jacket. The cutting surfaces cut the outer jacket around its circumference. The cutting surfaces are disengaged from the jacket and the cut portion of the jacket is removed from the fiber optic cable.
Fig. 1 illustrates a prior art tooling arrangement for stripping the outer jacket from a fiber optic cable.
Fig. 2 illustrates a fiber optic cable stripping tool in accordance with an embodiment of the present invention.
Fig. 3 illustrates the upper cutting surface and lower cutting surface of the tool of Fig. 2 in a non-engaging position with respect to the fiber optic cable.
Fig. 4 illustrates the upper cutting surface and lower cutting surface of the tool of Fig. 2 in a position where the cutting surfaces have penetrated the outer jacket of the fiber optic cable.
Fig. 5 illustrates the upper and lower cutting surfaces and the cutting diameter control member of the tool of Fig. 2.
Fig. 6 is a rear view of the cutting diameter control member of Fig. 5.
Fig. 7 is an alternative embodiment for the upper and lower cutting surfaces of the present invention.
Fig. 8 illustrates the method steps in practicing an embodiment of the present invention.

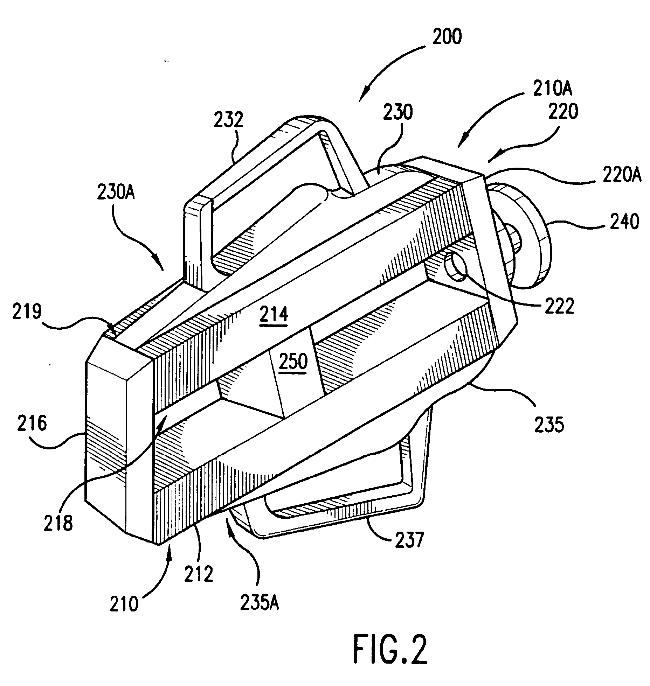

Fig. 2 illustrates an embodiment of a tool that can be utilized when practicing the present invention. As can be seen, fiber optic cable stripping tool 200 is comprised of a frame member 210, a housing 220, a first handle member 230, a second handle member 235 and two handle extension members 232 and 237. Frame member 210 includes a first support member 212 and a second support member 214. First support member 212 and second support member 214 are attached at a first end thereof to rear support member 216 and are attached at a second end thereof to housing 220. First support member 212 and second support member 214 are positioned in an opposed relationship to each other, thus, there is a channel 218 formed therebetween.

Included in both first support member 212 and second support member 214 is a recess, one of which is illustrated in Fig. 2 as recess 219 in second support member 214. Each recess extends through the support member. Upper handle member 230 is disposed within recess 219 of second support member 214 and lower handle member 235 is disposed within the recess included in first support member 212. Both upper handle member 230 and lower handle member 235 are pivotally attached to their respective support members at a rear end thereof, i.e., ends 230A and 235A, respectively, such that the handle members are configured for pivotal motion within their respective recesses.

As will be discussed further later in this specification, attached to the front end of each handle member is a cutting surface. The cutting surface of each handle member is disposed within housing 220 and is utilized to cut a fiber optic cable's outer jacket.

Housing 220 is rigidly attached to frame member 210 at a front end 210A thereof. The housing includes an opening 222 through which the fiber optic cable that is to be stripped is inserted.

Cutting diameter control member 240 is rotatably attached to the front end 220A of housing 220. Cutting diameter control member 240 contains a central orifice that extends completely therethrough. The central orifice in control member 240 is aligned with opening 222 in housing 220 such that an opening extends completely through control member 240 and housing 220 so that the fiber optic cable that is to be stripped can be inserted through the housing and be disposed between the upper and lower cutting surfaces. As will be further explained, cutting diameter control member 240 limits the movement of the upper and lower cutting surfaces to define a cutting diameter for the cutting surfaces such that fiber optic cables of various diameters can be stripped.

As stated previously, the upper and lower cutting surfaces, which are attached to handles 230 and 235, respectively, are disposed within housing 220. Handles 230 and 235 are biased away from each other, such as by utilizing springs, so that the cutting surfaces, as disposed within housing 220, are positioned away from the opening 222 that extends through the housing.

As will be further explained, when an operator desires to strip a fiber optic cable, the cable is inserted through opening 222 which positions the cable between the upper and lower cutting surfaces. The operator applies pressure to handles 230 and 235, which overcomes the force that biases the handles away from each other, and compresses the handles toward each other which in-turn draws the upper and lower cutting surfaces toward each other. As the upper and lower cutting surfaces are drawn towards each other, the cutting surfaces engage the outer jacket of the fiber optic cable. As additional pressure is applied to the handle members, the cutting surfaces cut substantially through the outer jacket of the cable to a predefined depth. The cutting diameter control member 240 controls the distance that the cutting surfaces are able to be drawn towards each other, thus defining the cutting diameter of the cutting surfaces. The operation of the cutting diameter control member 240 will be further explained later in this specification.

Also shown in Fig. 2 is cable stop member 250. Cable stop member 250 is slidably mounted within the channel 218 that is defined by upper support member 214 and lower support member 212. By positioning cable stop member 250 at a particular position, a fiber optic cable that is inserted through housing 220 to be stripped is only able to be inserted a specified distance though housing 220. Thus, the cable is positioned between the upper and lower cutting surfaces at a location on the cable from which the outer jacket is to be stripped. A measurement scale may be provided on frame 210 so that the distance that stop 250 is positioned from the cutting surfaces can be determined. Thus, by accurately positioning cable stop 250 within channel 218, the desired length of the outer jacket that is to be stripped from the cable can be measured.

Fig. 2 also illustrates handle extension members 232 and 237. Handle extension member 232 is attached to upper handle member 230 and handle extension member 237 is attached to lower handle member 235. The handle extension members can be either integrally formed with their respective handle members or can be attached to the handle members. Each handle extension member is included to provide additional mechanical advantage for an operator of the tool when compressing handle members 230 and 235 to strip a fiber optic cable jacket. Because the distance between handle member 230 and handle member 235 may not be great when compared to the size of the hand of an operator of the tool, it may be difficult for the operator to apply compressive pressure to the handles. Therefore, handle extension members 232 and 237 are provided to make the tool easier to use for the operator.

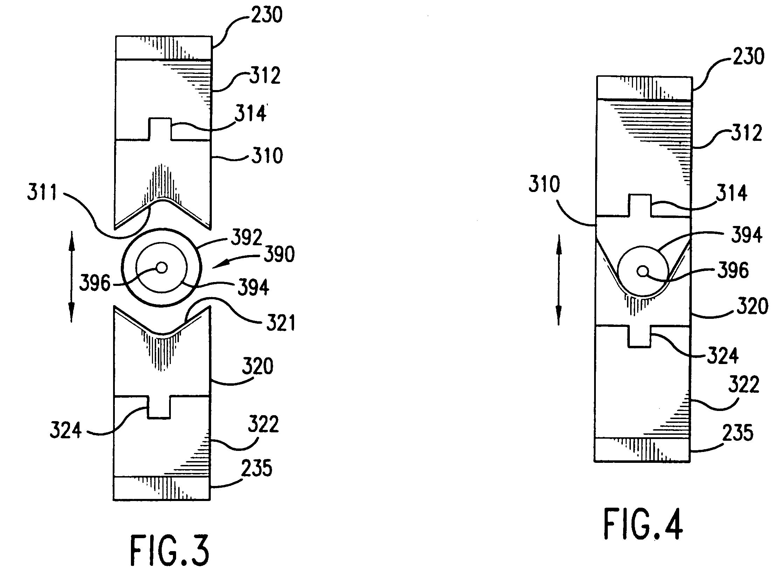

Figs. 3 and 4 illustrate the upper cutting surface 310 and lower cutting surface 320 as they would be disposed within housing 220 (not shown) with a fiber optic cable 390 disposed therebetween through opening 222 in the housing. Fig. 3 illustrates the upper cutting surface 310 and lower cutting surface 320 in a first position where the cutting surfaces are disposed apart from each other so that cable 390 can be positioned between the cutting surfaces. Fig. 4 illustrates upper cutting surface 310 and lower cutting surface 320 in a second position where the cutting surfaces have been drawn together, by compressing handles 230 and 235, such that upper cutting surface 310 and lower cutting surface 320 have engaged and have substantially penetrated the outer cable jacket 392 in order to cut the fiber optic cable jacket.

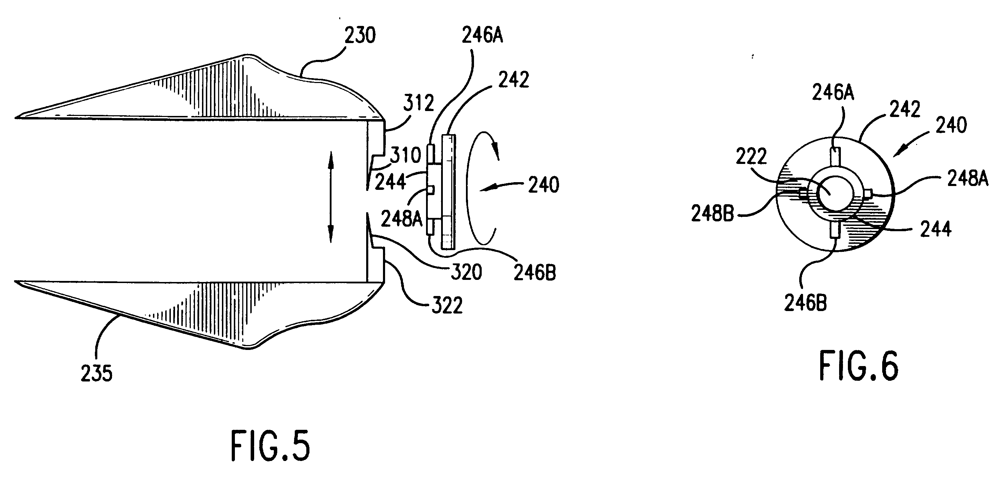

In further describing the upper and lower cutting surfaces as illustrated in Figs. 3 and 4, it can be seen that the upper and lower cutting surfaces are similarly configured. Therefore, a detailed description will only be provided of upper cutting surface 310. As can be seen, upper cutting surface 310 is attached to upper handle member 230. Upper cutting surface 310 extends from handle member 230 and is disposed substantially perpendicular to handle member 230, as can also be seen in Fig. 5. Upper cutting surface 310 includes a knife edge 311 which is shaped in an arcuate-like configuration. As such, the upper knife edge 311 is formed to engage fiber optic cable 390 along a substantial portion of the upper-half circumference of the fiber optic cable. Thus, cutting surface 310 does not engage the fiber optic cable at only a single contact point but rather engages the fiber optic cable along substantially the upper circumference of the cable with knife edge 311.

As is also illustrated in Figs. 3-5, upper cutting surface 310 contains a slot housing 312 which defines a slot 314. Lower cutting surface 320 is similarly configured. As will be further described, the slot housings are utilized in combination with cutting diameter control member 240 to control the distance of travel of the upper and lower cutting surfaces so as to define a cutting diameter for the cutting surfaces as the cutting surfaces are drawn together by compressing handles 230 and 235. Cutting diameter control member 240 is not illustrated in Figs. 3 and 4 but will be described when discussing Fig. 5.

Fig. 4 illustrates the upper cutting surface 310 and lower cutting surface 320 when the surfaces have been drawn together by compressing handles 230 and 235. When the upper and lower cutting surfaces are compressed by overcoming the biasing force that maintains them in their opposing positions, the two arcuate-like knife edges 311, 321 are drawn together to define a cutting diameter that is sized to cut substantially through the outer jacket of the cable. The outer jacket 392 is then cut through substantially along its entire outer circumference.

Figs. 5 and 6 illustrate the interaction of the cutting diameter control member 240 and the upper and lower cutting surfaces 310 and 320, respectively, in order to control the distance that the upper and lower surfaces move, thus defining the cutting diameter formed by the cutting surfaces when they are drawn together. Cutting diameter control member 240 is rotatably mounted within housing 220 (not shown in Fig. 5). Cutting diameter control member 240 consists of an outer indicator wheel 242 and an inner hub 244. Extending from the outer circumference of inner hub 244 are at least two sets of tabs. As can be seen in Figs. 5 and 6, a first set of tabs includes tabs 246A and 246B and a second set of tabs includes tabs 248A and 248B. Only tab 248A of the second set of tabs can be seen in Fig. 5. Each tab in each set of tabs extends the same distance from the outer circumference of inner hub 244 and each set of tabs extends a different distance from hub 244 than each other set of tabs.

As cutting diameter control member 240 is rotated to a position within housing 220, one of the sets of tabs are received within the slots that are defined by the slot housings that are included on the upper and lower cutting surfaces. As the upper and lower cutting surfaces are drawn together by the user compressing handles 230 and 235, the upper and lower cutting surfaces are only able to converge a specified distance in order to define a cutting diameter. The cutting surfaces are only able to converge towards each other until their respective slots are restrained against further movement by the outer end portion of the tab that is positioned within the slot. Because each set of tabs has a different length, the positioning of a different set of tabs within the slots defines a different cutting diameter. Each set of tabs is associated with a measurement indicator that is included on the outer indicating wheel 242 which indicates the specific cutting diameter that is associated with each set of tabs.

In order to provide for rotational movement of the sets of tabs within the slots, and thus for changing the cutting diameter defined by the cutting surfaces, the sets of tabs and the slots may include cam surfaces such that by rotating cutting diameter control member 240, one particular set of tabs can be rotated out of the slots and another particular set of tabs can be rotated into the slots in order to change the cutting diameter.

Figure 6 is a rear view of cutting diameter control member 240 with both the first set of tabs 246A, 246B and the second set of tabs 248A, 248B disposed on the outer circumference of inner hub 244. As can be seen, the length of the set of tabs 246A, 246B is greater than the length of the set of tabs 248A, 248B. Therefore, as the tabs are positioned within the slots that are associated with the upper and lower cutting surfaces, the upper and lower cutting surfaces will only be able to be drawn together until the slots are restrained against further movement by the tabs.

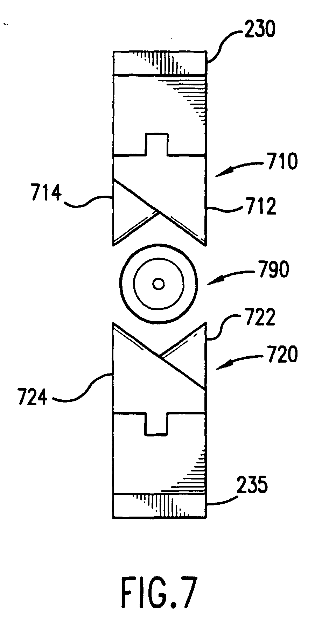

It was discussed that the upper cutting surface and the lower cutting surface are each comprised of a single structure that includes an arcuate-like shaped knife edge. However, as is illustrated in Fig. 7, each of the upper cutting surface and the lower cutting surface can be comprised of multiple blades. Fig. 7 illustrates upper cutting surface 710 and lower cutting surface 720 as each being comprised of two blades. Since upper cutting surface 710 is configured similarly to lower cutting surface 720, a description will only be provided of upper cutting surface 710. As can be seen, upper cutting surface 710 is comprised of a first blade 712 and a second blade 714. Each blade includes an angled cutting surface of approximately 45°. As such, when one blade, for example blade 712, is placed in an overlapping position with respect to cutting blade 714, the angled cutting surfaces intersect and thus, in effect, an arcuate-like cutting surface is formed which is similar to the arcuate-like cutting surface disclosed in Figs. 3 and 4. As such, the cutting surfaces as configured in Fig. 7 we able to engage a fiber optic cable 790 substantially along its entire outer circumference to cut through the outer jacket of the cable.

A potential benefit in constructing the cutting surface by utilizing two overlapping blades to form an arcuate-like cutting surface rather than utilizing a single blade is that it may be easier to construct the cutting surface as configured in Fig. 7 as opposed to the cutting surface of Figs. 3 and 4. This may be so because machining an arcuate-like surface in a single blade may be more difficult than forming an arcuate-like surface by overlapping two 45° angled blades. Regardless of the construction of the upper and lower cutting surfaces, the cutting surfaces are able to engage a fiber optic cable substantially around its entire circumference in order to cut the outer jacket of the cable.

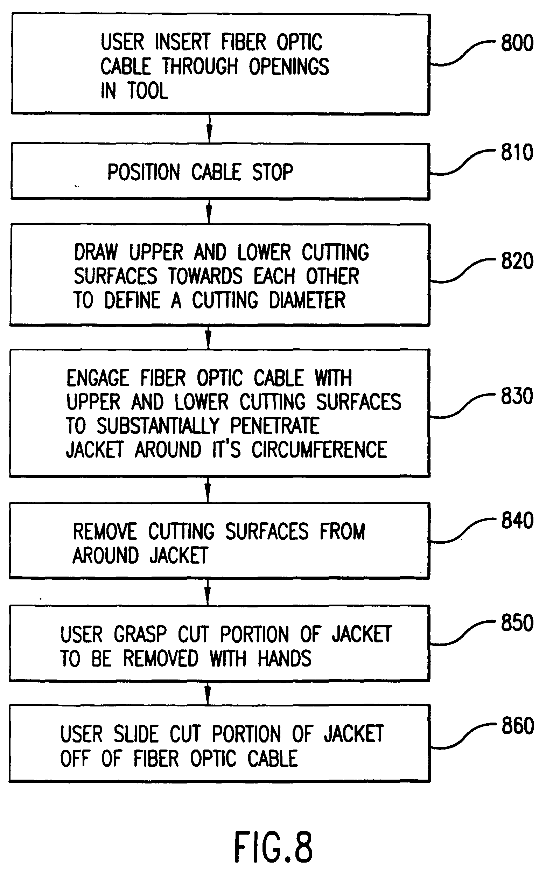

Fig. 8 illustrates the method steps for an embodiment of the present invention. In step 800, a user inserts a fiber optic cable that is to be stripped of its outer jacket through the openings defined by cutting diameter control member 240 and housing 220. The user positions cable stop 250 at a position such that as the fiber optic cable is inserted into the tool, the end of the cable is stopped by the cable stop thus positioning the outer jacket between the blades of the upper and lower cutting surfaces at the location on the cable from which the outer jacket is to be stripped, step 810. Once the fiber optic cable is positioned within the tool, the user applies pressure to upper handle member 230 and lower handle member 235 to compress the handles against the biasing force that biases the handles away from each other, step 820. By compressing the handles the upper cutting surface and the lower cutting surface, which are attached to the upper and lower handle members, respectively, are also drawn together to define a cutting diameter. The upper and lower cutting surfaces can only be drawn together until the tabs of cutting diameter control member 240 engage the slots that are included on the upper and lower cutting surfaces. When the tabs engage the slots, the upper and lower cutting surfaces are restrained from further movement towards each other and define the cutting diameter of the cutting surfaces. At this position, the upper and lower cutting surfaces have engaged the outer jacket of the fiber optic cable and have substantially penetrated the outer jacket of the fiber optic cable around its circumference, step 830. The cutting diameter is defined to ensure that sufficient penetration of the jacket is achieved such that the jacket can be removed from the cable by the user, but yet not damage the optical fiber contained within the jacket.

After the upper cutting surface and lower cutting surface have penetrated the outer cable jacket around its circumference, the user removes the cutting surfaces from around the jacket, step 840. The user then grasps the cut portion of the jacket that is to be removed with his or her hands, step 850, and slides the cut portion of the jacket off of the cable, step 860. Because the jacket has been cut substantially around its circumference by the upper and lower cutting surfaces, the manual sliding of the jacket by the operator will remove the cut portion of the outer jacket from the cable. In this manner, an operator can easily strip an outer jacket from a fiber optic cable by cutting the fiber optic cable around its circumference with a tool and then removing the cut outer jacket from the cable by grasping the cut portion of the jacket with his/her hands and sliding the jacket off of the cable.

An embodiment of a known tool that could be utilized when practicing the methods of the present invention is the precision wire stripper as advertised in Techni-Tool®, catalog 61, page 55, product numbers 217ST757 and 217ST3757. Other tool embodiments can be implemented by those skilled in the art without departing from the spirit and scope of the present invention. For example, the present invention is not limited to the slot and tab arrangement as disclosed for limiting the movement of the cutting surfaces to define a cutting diameter. The tabs could be provided on the cutting surfaces and the slots could be provided on the cutting diameter control member. Additionally, many other embodiments for a movement limiter could be contemplated and the present invention is not limited to any particular apparatus.

Alternatively, it is not even required that an adjustable movement limiter to form various cutting diameters be utilized when practicing the present invention. For example, if it is known that the present invention will only be practiced with fiber optic cables of a single specified diameter, then an adjustable movement limiter would not be required. Additionally, a cable stop is not required when practicing the methods of the present invention.

Whereas the present invention has been described as being implemented in a hand tool, it is not required that the cutting surfaces be contained in a hand tool and that the cutting surfaces be operated by having the user compress the handles of the tool. The methods of the present invention could be practiced with a non-portable tool. For example, the tool could be rigidly attached to a support structure, e.g., a work bench, with the cutting surfaces attached to arms that are pivotally mounted within the frame of the tool. An actuator lever operably coupled to each arm could be moved by the operator such that movement of the actuator lever effects movement of both cutting surfaces.

As described above, a fiber optic cable stripper and method is provided. The disclosed embodiments are illustrative of the various ways in which the present invention may be practiced. Other embodiments can be implemented by those skilled in the art without departing from the spirit and scope of the present invention.

## Claims

1. A method for stripping an outer jacket from a fiber optic cable comprising the steps of:
inserting an end of a fiber optic cable a distance through an opening defined by an upper cutting surface and a lower cutting surface, the fiber optic cable including an outer jacket wherein the outer jacket encases an optical fiber, said distance defining a portion of the fiber optic cable to be stripped of the outer jacket;
drawing the upper cutting surface and the lower cutting surface towards each other to define a cutting diameter;
engaging the fiber optic cable by the upper cutting surface substantially along a first half of the circumference of the outer jacket;
engaging the fiber optic cable by the lower cutting surface substantially along a second half of the circumference of the outer jacket;
substantially cutting through the first half of the circumference of the outer jacket by the upper cutting surface;
substantially cutting through the second half of the circumference of the outer jacket by the lower cutting surface;
disengaging the upper and lower cutting surfaces from the first and second halves of the circumference of the outer jacket, respectively; and
removing the outer jacket from the portion of the fiber optic cable to be stripped of the outer jacket.

2. The method of claim 1 further comprising the step of restricting the distance that the fiber optic cable is able to be inserted through the opening.

3. The method of claim 1 or 2 further comprising the step of adjusting the cutting diameter defined by the upper and lower cutting surfaces.

4. The method of claim 1, 2 or 3 wherein the steps of substantially cutting through the first and second halves of the circumference of the outer jacket comprises the steps of:
applying pressure to a first handle member to move the first handle member a defined distance, said first handle member operably coupled to the lower cutting surface; and
applying pressure to a second handle member to move the second handle member a defined distance, said second handle member operably coupled to the upper cutting surface.

5. The method of claim 1, 2, 3 or 4 wherein each of said upper and lower cutting surfaces are comprised of a first blade and a second blade.

6. The method of any one of claims 1 to 5 wherein each of said upper and lower cutting surfaces include an arcuate-like shaped knife edge.

7. The method of any one of claims 2 to 6 wherein the step of restricting the distance that the fiber optic cable is able to be inserted through the opening comprises the step of positioning a cable stop within a frame.

8. The method of any one of claims 3 to 7 wherein the step of adjusting the cutting diameter defined by the upper and lower cutting surfaces comprises the steps of:
controlling a distance that a first handle member is moved, the first handle member operably coupled to the lower cutting surface; and
controlling a distance that a second handle member is moved, the second handle member operably coupled to the upper cutting surface.

9. The method of claim 8 wherein the steps of controlling the distance that the first and second handle members are moved comprises the step of positioning first and second tabs within first and second slots, respectively, wherein said first and second slots are defined by said first and second cutting surfaces, respectively.

10. The method of claim 9 wherein the step of positioning said first and second tabs within said first and second slots comprises the step of manually rotating said first and second tabs to align with said first and second slots.

11. The method of any of claims 1 to 10 wherein said step of removing the outer jacket from the portion of the fiber optic cable to be stripped of the outer jacket includes the steps of:
grasping the outer jacket of the portion of the fiber optic cable to be stripped with an operator's hands; and
sliding the outer jacket of the portion of the fiber optic cable to be stripped off of the fiber optic cable.

12. The method of any one of claims 1 to 11
wherein said upper cutting surface is attached to a first arm and said lower cutting surface is attached to a second arm and wherein said first arm and said second arm are pivotally mounted within a frame mounted to a support structure and said first arm and said second arm are operably coupled to an actuator lever;
and wherein said step of drawing the upper cutting surface and lower cutting surface towards each other to define a cutting diameter includes the step of moving said actuator lever.

13. A fiber optic jacket stripping tool comprising:
a frame member, said frame member including a first support member and a second support member;
a housing, said housing connected to said frame member at a first end of said frame member, wherein said housing defines an opening which extends therethrough;
a first handle member, said first handle member pivotally attached to said first support member and including a first handle extension member;
a second handle member, said second handle member pivotally attached to said second support member and including a second handle extension member;
a first cutting surface, said first cutting surface attached to said first handle member and disposed within said housing; and
a second cutting surface, said second cutting surface attached to said second handle member and disposed within said housing.

14. The fiber optic jacket stripping tool of claim 13 further comprising a cutting diameter control member, said cutting diameter control member rotatably attached to said housing.

15. The fiber optic jacket stripping tool of claim 14 wherein said first and second cutting surfaces define first and second slots, respectively, and wherein said cutting diameter control member includes first and second tabs, said first and second tabs receivable within said first and second slots.

16. The tool of claim 13, 14 or 15 wherein each of said upper and lower cutting surfaces include an arcuate-like shaped knife edge.

17. The tool of claim 13, 14, 15 or 16 wherein each of said upper and lower cutting surfaces are comprised of a first blade and a second blade.

18. The tool of claim 13, 14, 15, 16 or 17 further comprising a cable stop, said cable stop slidably mounted to said frame member and disposed between said first support member and said second support member.
